(19) Europäisches Patentamt
European Patent Office
Office européen des brevets

(11) **EP 1 887 346 A1**

(12) **EUROPEAN PATENT APPLICATION**
published in accordance with Art. 153(4) EPC

(43) Date of publication:
**13.02.2008 Bulletin 2008/07**

(51) Int Cl.:
*G01N 25/16* (2006.01)    *G01N 21/05* (2006.01)
*G01N 21/41* (2006.01)    *G01N 35/08* (2006.01)

(21) Application number: **06728647.6**

(22) Date of filing: **28.02.2006**

(86) International application number:
**PCT/JP2006/304227**

(87) International publication number:
**WO 2006/123468 (23.11.2006 Gazette 2006/47)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.05.2005 JP 2005148433**

(71) Applicants:
- **Nippon Sheet Glass Company Limited**
  **Minato-ku**
  **Tokyo 1058552 (JP)**
- **KANAGAWA ACADEMY OF SCIENCE AND TECHNOLOGY**
  **Kawasaki-shi,**
  **Kanagawa-ken 213-0012 (JP)**

(72) Inventors:
- **NARA, Masatoshi**
  **Nippon Sheet Glass Company, Ltd.**
  **Tokyo**
  **1058552 (JP)**
- **ANRAKU, Ryo**
  **c/o Nippon Sheet Glass Company, Ltd.**
  **Minato-ku, Tokyo**
  **1058552 (JP)**
- **ASAI, Takahiro**
  **c/o Nippon Sheet Glass Company, Ltd**
  **Tokyo**
  **1058552 (JP)**

- **YAMAGUCHI, Jun**
  **c/o Nippon Sheet Glass Company, Ltd**
  **Tokyo**
  **1058552 (JP)**
- **HATTORI, Akihiko**
  **Nippon Sheet Glass Company, Ltd**
  **Tokyo**
  **1058552 (JP)**
- **KITAMORI, Takehiko**
  **1130033 (JP)**
- **TOKESHI, Manabu**
  **304, Rose Garden, 2-15-3**
  **Kawasaki-shi, Kanagawa**
  **2130012 (JP)**
- **HIBARA, Akihide**
  **Showa-machi, Kita-ku, Tokyo**
  **1140011 (JP)**
- **MAWATARI, Kazuma**
  **Nishigahara, Kita-ku**
  **Tokyo**
  **1140024 (JP)**

(74) Representative: **Kohler Schmid Möbus**
**Patentanwälte**
**Ruppmannstrasse 27**
**70565 Stuttgart (DE)**

(54) **MICROCHEMICAL SYSTEM AND ITS TLM OUTPUT CALCULATING METHOD**

(57) There are provided a microchemical system capable of acquiring a highly accurate TLM output value and a method for calculating TLM output thereof. A microchemical system 1 comprises: a microchemical chip having a channel with a depth t in which a sample flows; an exciting light source 13 adapted to irradiate the sample with an exciting light through an objective lens 10 with a numerical aperture NA; a detecting light source 14 adapted to irradiate the sample with a detecting light coaxially with the exciting light through the objective lens 10; and a PD adapted to receive a transmitted light when the detecting light transmits the sample before and after formation of a thermal lens 12. When a TLM output is calculated in the microchemical system 1 on the basis of a received light amount of the PD, the depth t ($\mu$m) is set to the range of $75 \le t \le 300$, the numerical aperture NA is set to the range of $0.04 \le NA \le 0.1$ and chromatic aberrations df (nm) for the exciting light and the detecting light of the objective lens 10 is set to the range of $100 \le df \le 250$.

EP 1 887 346 A1

# *FIG. 2*

```
( TLM OUTPUT CALCULATING PROCESS )
                    │
                    ▼
┌─────────────────────────────────┐
│   SET PARAMETER VALUES FOR      │
│  CALCULATION OF HEAT GENERATION │ ── S200
│          DISTRIBUTION           │
└─────────────────────────────────┘
                    │
                    ▼
┌─────────────────────────────────┐
│   CALCULATE HEAT GENERATION     │
│ DISTRIBUTION OF SAMPLE AT THE TIME │ ── S201
│ OF IRRADIATION WITH EXCITING LIGHT │
└─────────────────────────────────┘
                    │
                    ▼
┌─────────────────────────────────┐
│   SET PARAMETER VALUES FOR      │
│  CALCULATION OF TEMPERATURE     │ ── S202
│          DISTRIBUTION           │
└─────────────────────────────────┘
                    │
                    ▼
┌─────────────────────────────────┐
│     ANALYSIS TIME i = tmin      │ ── S203
└─────────────────────────────────┘
                    │
                    ▼
┌─────────────────────────────────┐
│     CALCULATE TEMPERATURE       │
│  DISTRIBUTION AT ANALYSIS TIME i │ ── S204
└─────────────────────────────────┘
                    │
                    ▼
┌─────────────────────────────────┐
│            i=i+Δt               │ ── S205
└─────────────────────────────────┘
                    │
                    ▼
        ◇  i=tmax ?  ◇            ── S206
  NO                    YES
```

S207                                    S208

| ACQUIRE MAXIMUM TEMPERATURE OF SAMPLE IN ONE CYCLE (tmin TO tmax) | ACQUIRE MINIMUM TEMPERATURE OF SAMPLE IN ONE CYCLE (tmin TO tmax) |

S209                                    S210

| BEAM PROPAGATION SIMULATION PROCESS | BEAM PROPAGATION SIMULATION PROCESS |

S211                                    S212

| CALCULATE ELECTRIC FIELD DISTRIBUTION (Imax) IN PD POSITION AT MAXIMUM TEMPERATURE | CALCULATE ELECTRIC FIELD DISTRIBUTION (Imin) IN PD POSITION AT MINIMUM TEMPERATURE |

S213

| CALCULATE TLM OUTPUT |

( END )

**Description**

Technical Field

The present invention relates to a microchemical system and a method for calculating TLM output thereof.

Background Art

In consideration of the rapidity of chemical reactions, and the need to carry out reactions using very small amounts, on-site chemical analyses, and the like, integration technologies for carrying out chemical reactions in a very small space has been focused upon and research into these technologies has been vigorously conducted.

As one of the integration technologies for performing a chemical reaction, there exists a so-called microchemical system in which mixture, reaction, separation, extraction, detection and the like of a sample are performed in a micro channel. Examples of the reaction performed in the microchemical system may include diazotization reaction, nitration reaction, and antigen-antibody reaction, and examples of the extraction and separation may include solvent extraction, electrophoretic separation, and column separation. The microchemical system may be used only with a single function aimed at the separation alone, or may be used in a complex manner.

Since a minute amount of a sample flows in a channel in a microchemical chip for use in these microchemical systems, a highly sensitive detecting method is essentially applied. As such a method, there has been established a thermal lens analysis method of detecting a value (hereinafter referred to as "TLM output") obtained by dividing a difference in signal intensity between detecting lights before and after irradiation of a sample in a micro channel with an exciting light by the signal intensity of the detecting light before irradiation, and thereby, the way has been open for practical application of the microchemical system.

When the sample is convergently irradiated with a light, a solvent in the sample absorbs the light, and concurrently, thermal energy is released. When a temperature of the solvent locally increases due to this thermal energy, a refractive index thereof changes, to form a thermal lens (thermal lens effect). The thermal lens analysis method is performed through the use of this thermal lens effect.

The thermal lens analysis method comprises observing a change in thermal diffusion, namely refractive index, as a TLM output, and a simulation method of accurately calculating this TLM output has hitherto been disclosed.

Specifically, it is assumed that a beam propagates on the basis of a ray tracing method by geometrical optics and that the above-mentioned refractive index distribution is a lens. A method of calculating a phenomenon in which a light bends by refraction under these assumptions is the simulation method.

For example, it has been disclosed that in a method of approximating a refractive index distribution of a thermal lens to a Gaussian distribution for calculating a TLM output by actual beam tracing, a range of NA for maximizing the TLM output is: $0.1 \leq NA \leq 0.4$ (see Japanese Laid-Open Patent Publication (Kokai) No. 2004-309430, for example).

Further, it has been disclosed that in a method of approximating a thermal lens having a refraction index distribution in accordance with an exciting beam propagation intensity I(r, z) to an SNS laminated optical system having a refraction index difference as a variable for calculating a TLM output by actual beam tracing, a range of NA for maximizing the TLM output is: $0.15 < NA < 0.6$ (see Japanese Laid-Open Patent Publication (Kokai) No. 2004-125478, for example).

Although the thermal lens phenomenon results from occurrence of a temperature increase by a beam of an exciting light, and a heat generation distribution takes a form according to an exciting light beam intensity distribution, a subsequent temperature rise is caused by thermal diffusion result from thermal conduction, advection due to flow of a solution in the microchemical chip, or the like, and an actual temperature distribution in the microchemical chip is significantly different from the firstly-given beam intensity.

Hence there is a problem in that as the foregoing prior art, when a refraction index distribution of a thermal lens is approximated to the Gaussian distribution or the SNS laminated optical system, the refraction index distribution of the lens for use in the calculation differs from the actual one from the first place, and inevitably, the obtained result largely includes an error caused by such a difference and thus cannot be expected to have accuracy.

Further, although in the prior arts the refraction index distribution is approximated to the SNS laminated optical system or the Gaussian distribution in which the refractive index changes more gently than in the SNS laminated optical system when the refractive index is assumed as the lens, interference of a light in a near field which is problematic is not considered in either approximation, thereby preventing correct simulation of beam propagation.

The present invention provides a microchemical system capable of acquiring a highly accurate TLM output value, and a method for calculating TLM output thereof.

Disclosure of the Invention

A microchemical system of the present invention comprises: a first irradiating unit adapted to irradiate a sample with an exciting light through a lens with a numerical aperture NA so as to form a thermal lens having a predetermined refraction index distribution in the sample flowing in a channel with a depth t; a second irradiating unit adapted to irradiate the sample with a detecting light coaxially with the exciting light through the lens; a light receiving section adapted to receive a transmitted light when the detecting light transmits the sample before and after formation of the thermal lens; and a TLM output calculating unit adapted to calculate a TLM output on the basis of a received light amount of the light receiving section, the lens having chromatic aberrations df for the exciting light and the detecting light, wherein the depth t ($\mu$m) is set to the range of $75 \leq t \leq 300$, the numerical aperture NA is set to the range of $0.04 \leq NA \leq 0.1$, and chromatic aberration df (nm) is set to the range of $100 \leq df \leq 250$.

A method of the present invention for calculating a TLM output of a microchemical system which includes a first irradiating unit adapted to irradiate a sample with an exciting light through a lens so as to form a thermal lens having a predetermined refraction index distribution in the sample flowing in a channel, a second irradiating unit adapted to irradiate the sample with a detecting light coaxially with the exciting light through the lens, a light receiving section adapted to receive a transmitted light when the detecting light transmits through the sample before and after formation of the thermal lens, and a TLM output calculating unit adapted to calculate a TLM output on the basis of a received light amount of the light receiving section, the lens having chromatic aberrations for the exciting light and the detecting light, comprises: a heat generation distribution calculating step of approximating a beam intensity distribution of the exciting light to a Gaussian distribution, to calculate a heat generation distribution of the sample by the exciting light under a condition set by the user; and a temperature distribution calculating step of calculating a temperature distribution of the sample on the basis of thermal fluid analysis.

Brief Description of the Drawings

FIG. 1 is a block diagram schematically showing a configuration of a microchemical system according to an embodiment of the present invention;

FIG. 2 is a flowchart showing a procedure for a TLM output calculating process that is executed by the microchemical system of FIG. 1;

FIG. 3 is a flowchart showing a procedure for a beam propagation simulation process that is executed in steps S209 and S210 of FIG. 2;

FIG. 4 is a graph showing a relationship among an aperture number NA, a chromatic aberration, and a TLM output when a depth t is set to 20 $\mu$m;

FIG. 5 is a graph showing the relationship among the aperture number NA, the chromatic aberration, and the TLM output when the depth t is set to 50 $\mu$m;

FIG. 6 is a graph showing the relationship among the aperture number NA, the chromatic aberration, and the TLM output when the depth t is set to 75 $\mu$m;

FIG. 7 is a graph showing the relationship among the aperture number NA, the chromatic aberration, and the TLM output when the depth t is set to 100 $\mu$m;

FIG. 8 is a graph showing the relationship among the aperture number NA, the chromatic aberration, and the TLM output when the depth t is set to 200 $\mu$m;

FIG. 9 is a graph showing the relationship among the aperture number NA, the chromatic aberration, and the TLM output when the depth t is set to 300 $\mu$m;

FIG. 10 is a graph showing the relationship among the aperture number NA, the chromatic aberration, and the TLM output when the depth t is set to 500 $\mu$m; and

FIG. 11 is a graph showing the relationship between the aperture number NA and the TLM output with respect to each depth t.

Best Mode for Carrying Out the Invention

As a result of keen examinations made to attain the above object of the present invention, the present inventors have found that in a microchemical system comprising: a first irradiating unit adapted to irradiate a sample with an exciting light through a lens with a numerical aperture NA so as to form a thermal lens having a predetermined refraction index distribution in the sample flowing in a channel with a depth t; a second irradiating unit adapted to irradiate the sample with a detecting light coaxially with the exciting light through the lens; a light receiving section adapted to receive a transmitted light when the detecting light transmits the sample before and after formation of the thermal lens; and a TLM output calculating unit adapted to calculate a TLM output on the basis of a received light amount of the light receiving section, the lens having chromatic aberrations df for the exciting light and the detecting light, a highly accurate TLM output value can be acquired when the depth t ($\mu$m) is set to the range of $75 \leq t \leq 300$, the numerical aperture NA is set to the range of $0.04 \leq NA \leq 0.1$ and chromatic aberration df (nm) is set to the range of $100 \leq df \leq 250$, where the numerical aperture NA can be set to the range of $0.05 \leq NA \leq 0.075$, the depth t ($\mu$m) can be set to the range of $100 \leq t \leq 300$ and the depth t ($\mu$m) can be set to the range of $200 \leq t \leq 300$.

Further, the present inventors have found that in a method for calculating a TLM output of a microchemical system which includes a first irradiating unit adapted to irradiate a sample with an exciting light through a lens so as to form a thermal lens having a predetermined refraction index distribution in the sample flowing in a channel, a second irradiating unit adapted to irradiate the sample with a detecting light coaxially with the exciting light through the lens, a light receiving section adapted to receive a transmitted light when the detecting light transmits through the sample before and after formation of the thermal lens, and a TLM output calculating unit adapted to calculate a TLM output on the basis of a received light amount of the light receiving section, the lens having chromatic aberrations for the exciting light and the detecting light, it is possible to simulate a TLM output in the case of beam propagation in a solvent having a refraction index distribution calculated by reflecting actual thermal diffusion and advection due to flow so as to acquire a highly accurate TLM output value when the method comprises: a heat generation distribution calculating step of approximating a beam intensity distribution of the exciting light to a Gaussian distribution, to calculate a heat generation distribution of the sample by the exciting light under a condition set by the user; and a temperature distribution calculating step of calculating a temperature distribution of the sample on the basis of thermal fluid analysis. The present inventors have found that it is possible to correctly calculate a behavior of a beam with interference in a near field taken into consideration, including a beam waist, when the method can comprise: a refraction index distribution calculating step of calculating a refraction index distribution of the sample from the calculated temperature distribution; a beam propagation calculating step of calculating beam propagation in the sample after irradiation with the exciting light on the basis of the calculated refraction index distribution; and an analytical transformation step of analytically transforming a region to where the transmitted light is received in the light receiving section.

The present invention was made on the basis of the above discovery.

In the following, an embodiment of the present invention will be described in detail with reference to drawings.

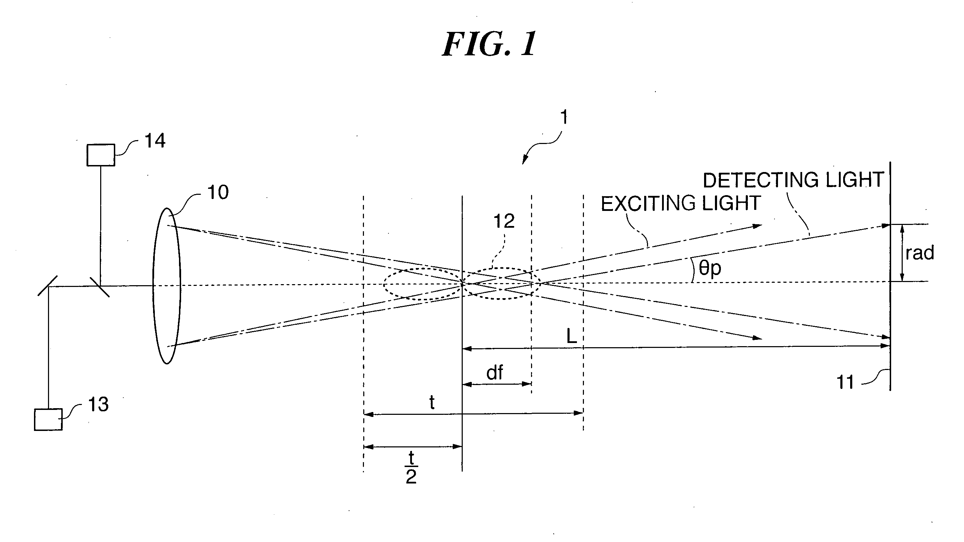

FIG. 1 is a block diagram schematically showing a configuration of a microchemical system according to an embodiment of the present invention.

In FIG. 1, a microchemical system 1 comprises: a microchemical chip (not shown) including a channel with a depth t in which a sample is fed; an objective lens 10 adapted to convergently irradiate a sample in a channel of the microchemical chip with an exciting light from an exciting light source 13 and a detecting light from a detecting light source 14; and a PD (not shown) adapted to receive a thermal lens 12 generated in the sample on a light receiving surface 11 to perform photoelectric transfer. A region in which this PD light receiving surface 11 can perform photoelectric transfer is a region of a concentric circle with a radius rad with respect to an optical axis of the objective lens 10.

In this microchemical system 1, first, the thermal lens 12 is formed in the sample by the exciting light with which the central position in the depth direction of the channel in the microchemical chip is convergently irradiated by the objective lens 10. At this time, the distance from the focus of this exciting light to the PD light receiving surface 11 is denoted as L.

Thereafter, the thermal lens 12 formed above is convergently irradiated with the detecting light by the objective lens 10. At this time, the detecting light is converged in a position displaced from the focus position of the exciting light by a focus difference (hereinafter referred to as "chromatic aberration") df that occurs due to a difference in wavelength between the exciting light and the detecting light.

Subsequently, the PD light receiving surface 11 is irradiated with the detecting light widened at $\theta_p$. At this time, in order to accurately detect a value, obtained by dividing a difference in signal intensity between detecting lights before and after irradiation of the sample in the channel of the microchemical chip with the exciting light by the signal intensity of the detecting light before irradiation (hereinafter referred to as "TLM output"), the distance L is controlled to set $\tan\theta_p < rad/(L-df)$ so that all detecting lights are received on the PD light receiving surface 11.

When beam propagation of the detecting light is occurred as described above, the TLM output calculating process is performed by: (1) calculating a heat generation distribution in the channel of the microchemical chip after irradiation with the exciting light (2) performing a thermal fluid analysis on the calculated heat generation distribution to calculate a temperature distribution; (3) transforming the calculated temperature distribution into a refraction index distribution; (4) calculating beam propagation by a beam propagation method when the sample is irradiated with the detecting light before and after irradiation with the exciting light; (5) analytically transforming the calculated electrical field distribution at an exit of the microchemical chip into an electrical field distribution on the PD light receiving surface 11; and (6) transforming this transformed electrical field distribution into a TLM output.

Here, in a coordinate with the focus position of the exciting light set as zero and the light propagation direction set as positive, in the range of (0 to t/2), the above processes (1) to (4) are performed. Further, the heat generation distribution is calculated in (2) with all sorts of conditions, such as a physical property of a solution and a velocity of the solution, a substituted thereinto as parameters. This enables correct calculation of thermal diffusion and advection due to flow similar to actual ones, and also calculation of accurate refractive index distribution.

Moreover, the process (5) comprises analytically changing beam propagation in the position of t/2 obtained by the process (4) to beam propagation in the position of L. This enables handling of interference that is not considered in the beam tracing, and correct calculation of a behavior of a beam with interference in a near field taken into consideration, including a beam waist.

(1) Heat generation distribution calculating process

The heat generation distribution of the sample by the exciting light is calculated by approximating the exciting light to the Gaussian-beam and using equations (1) to (3) as follows.

$$W_0 = \frac{\lambda}{\pi \cdot NA \cdot n} \qquad ...(1)$$

$$W_z = W_0 \cdot \sqrt{1 + \left\{ \lambda \cdot \frac{z}{\pi \cdot n \cdot W_0^2} \right\}^2} \qquad ...(2)$$

$$F(r,z) = A_0 \cdot \left( \frac{W_0}{W_z} \right)^2 \cdot \exp\left( -2 \frac{r^2}{W_z^2} \right) \qquad ...(3)$$

NA: numerical aperture of exciting light
n: refractive index of water
$\lambda$: wavelength of exciting light
A0: scale factor of calorific value
W0: beam waist of exciting light
Wz: spot of exciting light
F: distribution of calorific value
Z: coordinate with focus position of exciting light set as zero and light propagation direction as positive
r: distance from optical axis

(2) Temperature distribution calculating process

The temperature distribution of the sample is approximated such that the sample is non-compressed fluid, and thermal fluid analysis after irradiation with the exciting light is performed by basic equations for the thermal fluid analysis expressed by a mass conservation equation expressed by an equation (4), a momentum conservation equation expressed by an equation (5), and an energy conservation equation expressed by an equation (6).

$$\frac{1}{\rho} \frac{D\rho}{Dt} + div V = 0 \qquad ...(4)$$

$$\frac{DV}{Dt} = F - \frac{1}{\rho}\nabla p + \nu\nabla^2 V \qquad ...(5)$$

$$\frac{De}{Dt} + \frac{D}{Dt}\left(\frac{V^2}{2}\right) = V \cdot F_0 - V\frac{1}{\rho}\nabla p + V \cdot F + \frac{\phi}{\rho} + \frac{Q}{\rho} \qquad ...(6)$$

V: velocity vector
F: external force
p: kinematic of sample
y: dynamic viscosity of sample
p: pressure in sample

Here, on the left side of the equation (6), a first term expresses a change in internal energy, and a second term expresses a change in kinetic energy. Further, on the right side of the equation (6), a first term expresses a work by external force, a second term expresses a work by pressure gradient, a third term expresses a frictional work, a fourth term expresses a heat generated by fluid friction, and a fifth term expresses a heat from the outside.

In the present embodiment, a temperature distribution during one cycle of a modulation frequency is calculated in the range of $0 \leq z \leq t/2$ (t: depth of channel in microchemical chip), and by this calculation, the maximum temperature and the minimum temperature of the sample during one cycle are acquired.

(3) Process for transforming calculated temperature distribution into refractive index distribution

The refractive index distribution is obtained accordingly to the heat generation distribution obtained by the above-mentioned thermal fluid analysis, and calculated by an equation (7') as follows:

```
n = n0 + (dn/dt)ΔT ... (7')
```

n: calculated refractive index
n0: refractive index of sample solution at temperature before formation of thermal lens 12
dn/dt: increase in refractive index per temperature
$\Delta T$: amount of temperature increase by heat generation

In the present embodiment, the refractive index distribution at the maximum temperature obtained by the temperature distribution calculating process in (2) above is taken as the refractive index distribution of the sample after irradiation with the exciting light, namely after formation of the thermal lens 12. Further, the refractive index distribution at the minimum temperature obtained by the temperature distribution calculating process in (2) above is taken as the refractive index distribution of the sample before irradiation with the exciting light.

(4) Calculation process for beam propagation in sample

In beam propagation analysis at the time of irradiation of the sample with the detecting light before and after irradiation with the exciting light, first, a wave equation of beam propagation is approximated such that scalar approximation is established, and expressed by a Helmholtz equation expressed by an equation (7):

$$\frac{\partial^2 \phi}{\partial x^2} + \frac{\partial^2 \phi}{\partial y^2} + \frac{\partial^2 \phi}{\partial z^2} + k(x,y,z)^2 \phi = 0 \qquad ...(7)$$

Further, when it is assumed that in micro intervals finely divided to the extent of a light propagation wavelength order in the z-direction, the above equation including free space propagation, refractive index distribution, and the like, can be expressed by complex amplitude u (x, y, z) in which an electric field $\phi$ changes gently with respect to a propagation axis (z-axis), the following equation (8) is established.

$$\frac{\partial^2 u}{\partial z^2} + 2ik_0\bar{n}\frac{\partial u}{\partial z} + \nabla^2 u + k_0^2\left(n^2 - \bar{n}^2\right)u = 0$$

$$\phi(x,y,z) = u(x,y,z)e^{ikn_0 z} \qquad \dots(8)$$

$$\nabla^2 = \frac{\partial^2}{\partial x^2} + \frac{\partial^2}{\partial y^2}$$

When the change in the z-direction is very small in the above equation, the first term can be ignored, and an equation (9) can be obtained.

$$\frac{\partial u}{\partial z} = \frac{i}{2k_0\bar{n}}\left\{\nabla^2 + k_0^2\left(n^2 - \bar{n}^2\right)\right\}u \qquad \dots(9)$$

In the present embodiment, the beam propagation before irradiation with the exciting light is calculated by substituting the refractive index distribution at the foregoing minimum temperature into the above equation (9), and the beam propagation after irradiation with the exciting light is calculated by substituting the refractive index distribution at the foregoing maximum temperature into the above equation (9).

(5) Electric field distribution transforming process

Transformation of an electric field distribution at the exit of the microchemical chip into an electric field distribution on the PD light receiving surface 11 is performed by appropriating the detecting light to a coherent light.
Specifically, in propagation of the coherent light, a state of change in distribution of a light on some plane along with propagation is expressed as an output light distribution Uo(X, Y) obtained by linearly transforming a complex amplitude distribution Ui(x, y) as in an equation (10).

$$U_0(X,Y) = \iint U_i(x,y)K(X,Y;x,y)dxdy \qquad \dots(10)$$

Here, symbol K denotes a transfer function, and expresses the output distribution corresponding to a point light source (x, y) as the detecting light source 14.
When distribution of a light on the input/output plane is sufficiently small as compared with a propagation distance Z, an amplitude of the integral transfer function K in the above equation is given with a spherical wave with a uniform amplitude, and expressed as a wave number k = 2π/λ in an equation (11).

$$K(X,Y;x,y) = \exp\left[ik\sqrt{(X-x)^2 + (Y-y)^2 + Z^2}\right] \qquad \dots(11)$$

$$= \exp(ikr)$$

Therefore, the complex amplitude of the output face (PD light receiving surface 11) can be given by an equation (12).

$$U_0(X,Y) = \iint U_i(x,y)\exp(ikr)\,dx\,dy \qquad \ldots(12)$$

In the present embodiment, approximation in the exponential function in the equation (12) is not taken, but the electric field distribution on the PD light receiving surface 11 as it is subjected to numerical integration in the range to an aperture radius with the optical axis taken as the center. This process is performed on the beam propagations respectively at the minimum temperature and the maximum temperature calculated in the beam propagation calculating process in (4) above, and light receiving intensities at the respective temperatures on the PD light receiving surface 11 are calculated.

(6) Transformation process to TLM output

As shown in an equation (13), transformation to a TLM output is performed by subtracting the received light intensity on the PD light receiving surface 11 before formation of the thermal lens 12 from the received light intensity on the PD light receiving surface 11 after formation of the thermal lens 12, and then normalizing the obtained value with a total amount of light.

Further, in the present embodiment, the received light intensity at the minimum temperature obtained by the electric field distribution transforming process in (5) above is approximated to the received light intensity on the PD light receiving surface 11 before formation of the thermal lens 12, and the received light intensity at the maximum temperature obtained by the electric field distribution transforming process in (5) above is approximated to the received light intensity on the PD light receiving surface 11 after formation of the thermal lens 12.

$$\text{TLM output} = \frac{I(dn) - I(0)}{I(out)} \qquad \ldots(13)$$

I(dn): received light intensity on PD light receiving surface 11 after formation of thermal lens 12
I(0): received light intensity on PD light receiving surface 11 before formation of thermal lens 12
I(out): total amount of irradiated light

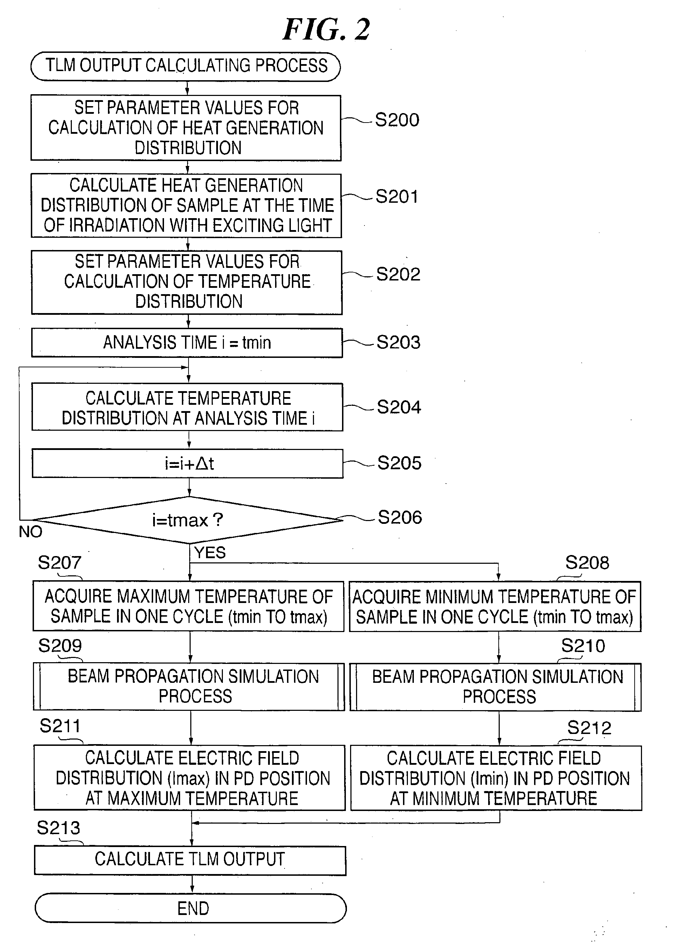

FIG. 2 is a flowchart showing a procedure for the TLM output calculating process that is executed by the microchemical system 1 of FIG. 1.

In FIG. 2, a variety of parameters for use in calculation of the heat generation distribution are set (step S200). Specifically, the parameters, such as a numerical aperture (NA) and a wavelength ($\lambda$) of the exciting light, a frequency of the detecting light, a scale factor (A0) of a calorific value determined for each sample, a refractive index (n) of water, and a groove depth (t) of a channel as a thermal fluid analysis portion are set in the present process.

Next, the heat generation distribution at the time of irradiation of the sample in the channel in the microchemical chip with the exciting light is calculated, (step S201). Specifically, the parameter values set in step S200 are substituted into the above equations (1) to (3), the heat generation distribution of the sample is calculated. The heat generation distribution obtained here changes on the basis of an intensity of the given exciting light which changes in accordance with modulation due to a frequency of the exciting light. Further, the heat generation distribution may be directly set to an arbitrary value.

Thereafter, a variety of parameter values for use in calculation of the temperature distribution are set (step S202). Specifically, the parameters, such as a velocity vector (V), external force (F), a density (p) of the sample, a kinematic viscosity (y) of the sample, and pressure (p) in the sample, are set in the present process.

Next, the thermal fluid analysis is performed on the heat generation distribution calculated in step S201, to calculate the temperature distribution (steps S203 to S206). Specifically, the parameter values set in step S202 are substituted into the basic equation (above equations (4) to (6)) for the thermal fluid analysis, and a temperature distribution during one cycle of the modulate frequency in the range ($0 \leq z \leq t/2$) of the analysis region obtained by the parameter values set in step S200.

In the present embodiment, in this temperature distribution calculating process, the above thermal fluid analysis is executed in a transient manner at each analysis time i set by dividing the time from irradiation starting time (tmin) with the detecting light from the detecting light source 14 to the irradiation end time (tmax) at intervals of minute time $\Delta t$ that is controlled by a chopper (not shown) provided in the detecting light source 14. Thereby, it is possible to accurately obtain the temperature distribution that changes with time in accordance with the modulate frequency.

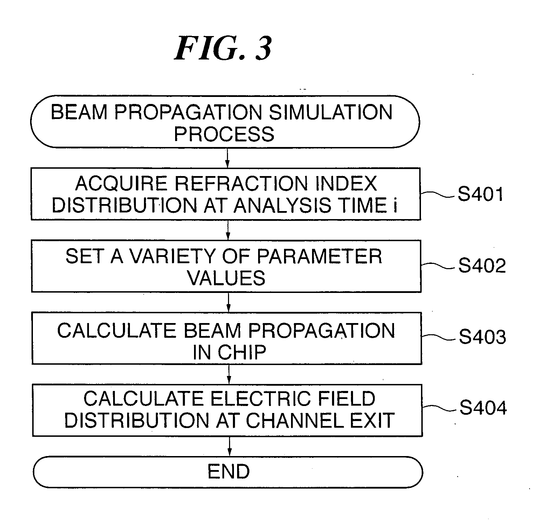

Next, the maximum temperature and the minimum temperature of the sample during one cycle obtained in the processes of steps S203 to S206 are acquired (steps S207 and S208), and at the respective temperatures are subjected to a later-described beam propagation simulation process of FIG. 3 (steps S209 and S210). It is possible by this process to obtain the electric field distribution at the microchemical chip exit (z=t/2) at the maximum temperature and the minimum temperature of the sample during one cycle.

Subsequently, the electric field distribution at the microchemical chip exit (z=t/2) at each temperature obtained by the processes of steps S209 and S210 is substituted into the above equation (12), to respectively calculating values (Imax, Imin) by integrating the electric field distribution on the PD light receiving surface 11 in the range to the opening radius with the optical axis taken as the center (steps S211 and S212).

Thereafter, Imax and Imin calculated in steps S211 and 212 are substituted into the above equation (13) and a difference between Imax and Imin is normalized with total amount of light, to calculate a TLM output (step S213), and the present process is terminated.

According to the process of FIG. 2, the beam intensity distribution of the exciting light is approximated to the Gaussian distribution to calculate the heat generation distribution of the sample by the exciting light under a condition set by the user (steps S200 and S201) and the temperature distribution of the sample is calculated on the basis of the thermal fluid analysis (steps S204 to S206), whereby it is possible to simulate the TLM output in the case of beam propagation in the solvent having the refractive index distribution which was calculated reflecting actual thermal diffusion and advection due to flow, so as to acquire a highly accurate TLM output.

FIG. 3 is a flow chart showing a procedure for the beam propagation simulation process that is executed in steps S209 and S210 of FIG. 2.

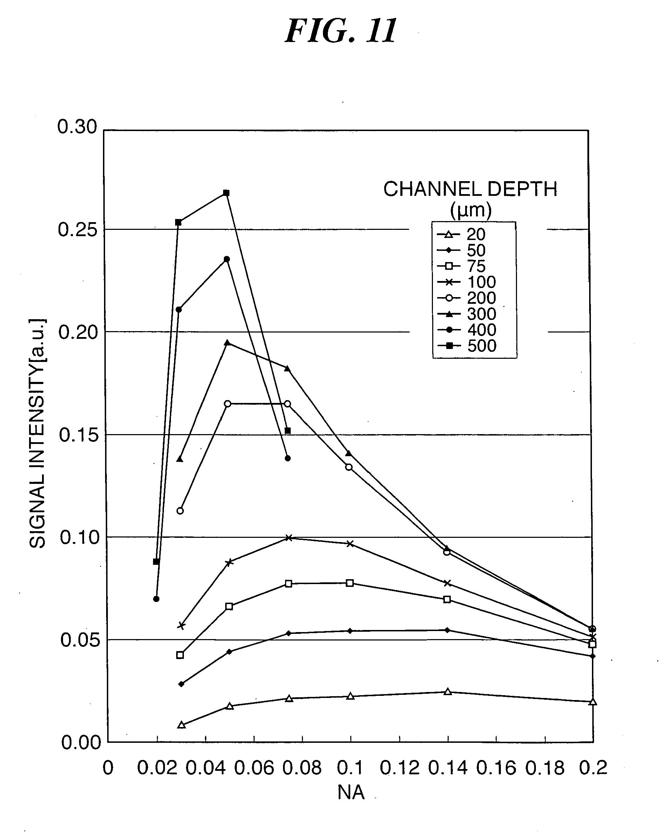

In FIG. 3, first, the maximum value and the minimum value of the temperature distribution obtained in steps S207 and S208 of FIG. 2 are substituted into the above equation (7'), to acquire a refractive index distribution of the sample at each analysis time i after irradiation with the exciting light (step S401). The objects to be transformed into the refractive index distribution in the present step are not restricted to the above temperature distributions at the maximum value and the minimum value, but as shown in FIG. 11, the difference may be calculated in the same manner on the basis of the temperature distribution at each analysis time during one cycle of the modulate frequency and a change in obtained signal with time may be subjected to Fourier transformation, to obtain the refractive index distribution.

Next, a variety of parameter values for use in calculation of the beam propagation are set (step S402). Specifically, values are set of an aperture number NA and a wavelength $\lambda$ for the detecting light, a chromatic aberration df with the exciting light, a distance L to the PD light receiving surface 11, and a radius rad on the PD light receiving surface 11.

Subsequently, the beam propagation in the microchemical chip is calculated by the above equations (7) to (9) (step S403), followed by analytical transformation of the beam propagation obtained by the above equations (10) to (12) with regard to the region to where the transmitted light is received from the microchemical chip in the light receiving section, to acquire the electric field distribution at the channel exit (step S404), and the present process is terminated.

According to the process of FIG. 3, the beam propagation in the sample after irradiation with the exciting light is calculated on the basis of the refraction index distribution of the sample calculated from the temperature distribution acquired in steps S207 and 208 of FIG. 2 (steps S401 and S403), and the analytical transformation is performed with regard to the region to where the transmitted light is received from the microchemical chip (step S404), whereby it is possible to correctly calculate a behavior of the beam with interference in the near field taken into consideration, including the beam waist.

Next, an example of the present invention will be described.

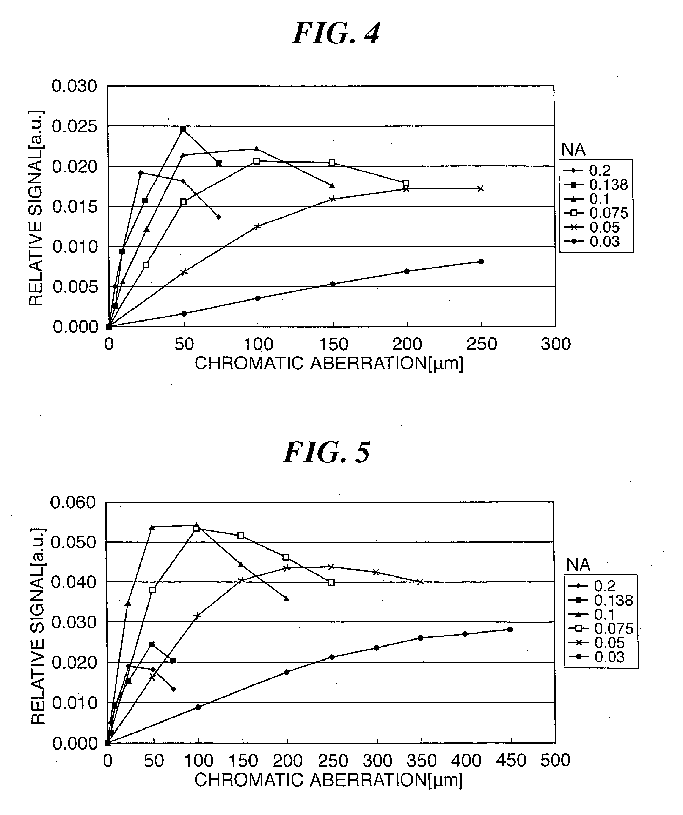

First, FIGS. 4 to 10 show intensities of TLM outputs when the depth t of the channel in the microchemical chip is set to 20 $\mu$m, 50 $\mu$m, 75 $\mu$m, 100 $\mu$m, 200 $\mu$m, 300 $\mu$m, and 500 $\mu$m, the numerical aperture NA of the exciting light is set to 0.030, 0.050, 0.075, 0.100, 0.138, and 0.200, and the chromatic aberration is set to 0 to 300 $\mu$m, and FIG. 11 shows the relationship between the NA and the TLM output with respect to each depth t of the channel.

(1) Regarding channel depth t

It was found that as shown in FIGS. 4 and 5, the maximum values of the TLM output are as small as 0.025 a.u. and 0.055 a.u. when the channel depth t is set to 20 $\mu$m and 50 $\mu$m and the numerical aperture and the chromatic aberration are changed in the above ranges, and actual measurement is thus difficult.

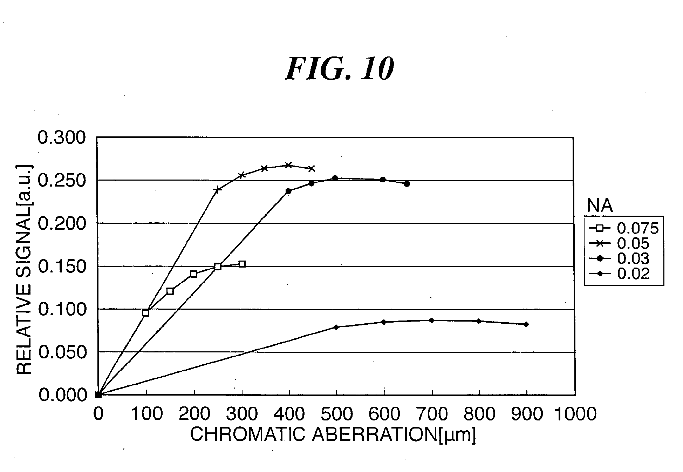

Further, it was found that as shown in FIG. 10, the signal intensity largely changes with a small change in value of the numerical aperture in the TLM output when the channel depth t is set to 500 $\mu$m, and the detection accuracy is thus deteriorated.

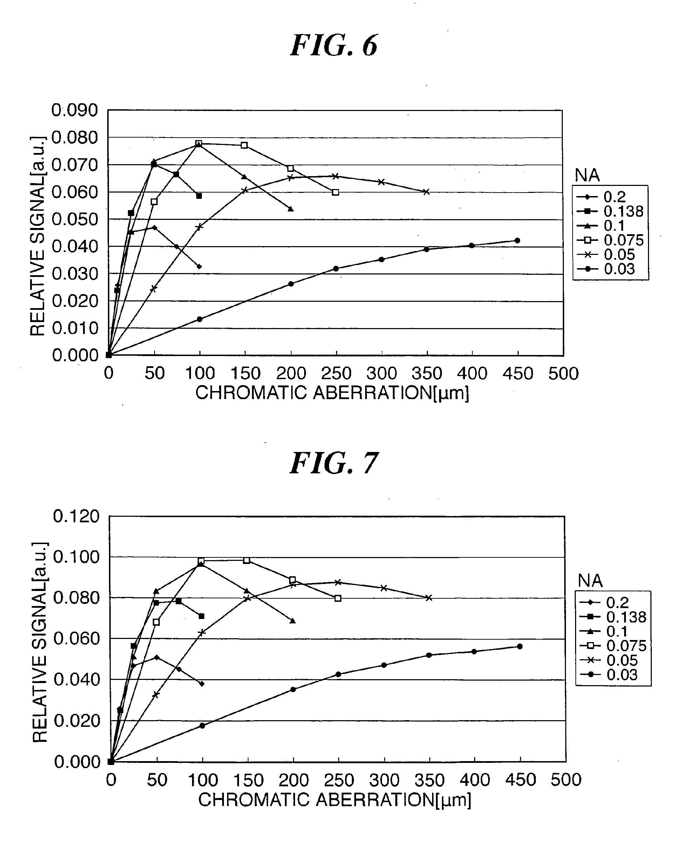

On the other hand, it was found that as shown in FIG. 6, the maximum value of the TLM output is around 0.080 a.u. indicative of clear appearance of the maximum value peak when the channel depth t is set to 75 $\mu$m, and hence this setting range is suitable for actual measurement.

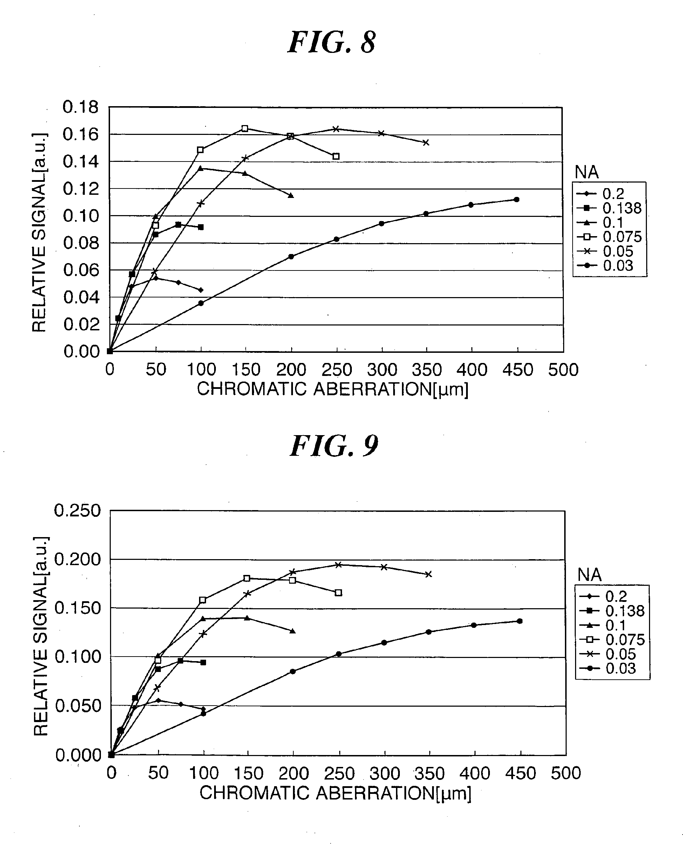

Further, it was found that as shown in FIG. 7, the maximum value of the TLM output is around 0.100 a.u indicative of clearer appearance of the maximum value peak when the channel depth t is set to 100 $\mu$m, and as shown in FIG. 8, the maximum value of the TLM output is around 0.165 a.u. indicative of further clearer appearance of the maximum value peak when the channel depth t is set to 200 $\mu$m.

Moreover, it was found that as shown in FIG. 9, the maximum value of the TLM output is around 0.200 a.u. indicative of even further clearer appearance of the maximum value peak when the channel depth t is set to 300 $\mu$m.

It was found from the above that the channel depth t is set to not smaller than 75 $\mu$m and not larger than 300 $\mu$m, can be set to not smaller than 100 $\mu$m and not larger than 300 $\mu$m, and can further be set to not smaller than 200 $\mu$m and not larger than 300 $\mu$m.

(2) Regarding numerical aperture NA

As shown in FIG. 11, it was found that the intensity of the TLM output becomes large when the numerical aperture is not smaller than 0.04 and not larger than 0.1. Further, it was found that the intensity of the TLM output can become even larger when the numerical aperture is not smaller than 0.05 and not larger than 0.075.

(3) Regarding chromatic aberration df

It was found that as described above, the TLM output value becomes large when the chromatic aberration df is not larger than 250 $\mu$m (FIG. 9) and not smaller than 100 $\mu$m (FIG. 6) with the channel depth t set in the range (75 to 300 $\mu$m) and the numerical aperture NA set in the range (0.05 to 0.075), the ranges being preferable for TLM output measurement.

INDUSTRIAL APPLICABILITY

According to the present invention, since the depth t ($\mu$m) is set to the range of $75 \leq t \leq 300$, the numerical aperture NA is set to the range of $0.04 \leq NA \leq 0.1$, and chromatic aberration df (nm) is set to the range of $100 \leq df \leq 250$, a highly accurate TLM output value can be acquired.

**Claims**

1.   A microchemical system, comprising:

         a first irradiating unit adapted to irradiate a sample with an exciting light through a lens with a numerical aperture NA so as to form a thermal lens having a predetermined refraction index distribution in said sample flowing in a channel with a depth t;
         a second irradiating unit adapted to irradiate said sample with a detecting light coaxially with said exciting light through said lens;
         a light receiving section adapted to receive a transmitted light when said detecting light transmits said sample before and after formation of said thermal lens; and
         a TLM output calculating unit adapted to calculate a TLM output on the basis of a received light amount of said light receiving section,
         said lens having chromatic aberrations df for said exciting light and said detecting light,

     wherein said depth t ($\mu$m) is set to the range of $75 \leq t \leq 300$, said numerical aperture NA is set to the range of $0.04 \leq NA \leq 0.1$, and said chromatic aberration df (nm) is set to the range of $100 \leq df \leq 250$.

2.   The microchemical system according to claim 1, wherein said numerical aperture NA is set to the range of $0.05 \leq NA \leq 0.075$.

3.   The microchemical system according to claim 1 or 2, wherein said depth t ($\mu$m) is set to the range of $100 \leq t \leq 300$.

4.   The microchemical system according to claim 3, wherein said depth t ($\mu$m) is set to the range of $200 \leq t \leq 300$.

5.   A method for calculating a TLM output of a microchemical system, which includes a first irradiating unit adapted to irradiate a sample with an exciting light through a lens so as to form a thermal lens having a predetermined refraction index distribution in said sample flowing in a channel, a second irradiating unit adapted to irradiate said sample with a detecting light coaxially with said exciting light through said lens, a light receiving section adapted to receive a transmitted light when said detecting light transmits through said sample before and after formation of said thermal lens, and a TLM output calculating unit adapted to calculate a TLM output on the basis of a received light amount of said light receiving section, said lens having chromatic aberrations for said exciting light and said detecting light, comprising:

a heat generation distribution calculating step of approximating a beam intensity distribution of said exciting light to a Gaussian distribution, to calculate a heat generation distribution of said sample by said exciting light under a condition set by the user; and

a temperature distribution calculating step of calculating a temperature distribution of said sample on the basis of thermal fluid analysis.

6. The TLM output calculating method according to claim 5, comprising:

a refraction index distribution calculating step of calculating a refraction index distribution of said sample from said calculated temperature distribution;

a beam propagation calculating step of calculating beam propagation in said sample after irradiation with said exciting light on the basis of said calculated refraction index distribution; and

an analytical transformation step of analytically transforming a region to where said transmitted light is received in said light receiving section.

FIG. 1

DETECTING LIGHT
EXCITING LIGHT

θp

rad

L

df

t

t/2

1

12

10

14

13

11

EP 1 887 346 A1

# FIG. 2

```
┌─────────────────────────────────────────┐
│   TLM OUTPUT CALCULATING PROCESS         │
└─────────────────────────────────────────┘
                    │
┌─────────────────────────────────┐
│  SET PARAMETER VALUES FOR        │
│  CALCULATION OF HEAT GENERATION  │── S200
│  DISTRIBUTION                    │
└─────────────────────────────────┘
                    │
┌─────────────────────────────────┐
│  CALCULATE HEAT GENERATION       │
│  DISTRIBUTION OF SAMPLE AT THE   │── S201
│  TIME OF IRRADIATION WITH        │
│  EXCITING LIGHT                  │
└─────────────────────────────────┘
                    │
┌─────────────────────────────────┐
│  SET PARAMETER VALUES FOR        │
│  CALCULATION OF TEMPERATURE      │── S202
│  DISTRIBUTION                    │
└─────────────────────────────────┘
                    │
┌─────────────────────────────────┐
│  ANALYSIS TIME i = tmin          │── S203
└─────────────────────────────────┘
                    │
┌─────────────────────────────────┐
│  CALCULATE TEMPERATURE           │── S204
│  DISTRIBUTION AT ANALYSIS TIME i │
└─────────────────────────────────┘
                    │
┌─────────────────────────────────┐
│  i=i+Δt                          │── S205
└─────────────────────────────────┘
                    │
          ◇ i=tmax ? ◇ ── S206
         NO │    │ YES
```

S207 — ACQUIRE MAXIMUM TEMPERATURE OF SAMPLE IN ONE CYCLE (tmin TO tmax)

S208 — ACQUIRE MINIMUM TEMPERATURE OF SAMPLE IN ONE CYCLE (tmin TO tmax)

S209 — BEAM PROPAGATION SIMULATION PROCESS

S210 — BEAM PROPAGATION SIMULATION PROCESS

S211 — CALCULATE ELECTRIC FIELD DISTRIBUTION (Imax) IN PD POSITION AT MAXIMUM TEMPERATURE

S212 — CALCULATE ELECTRIC FIELD DISTRIBUTION (Imin) IN PD POSITION AT MINIMUM TEMPERATURE

S213 — CALCULATE TLM OUTPUT

```
┌─────────────────────────────────────────┐
│                  END                     │
└─────────────────────────────────────────┘
```

# FIG. 3

```
┌──────────────────────────────────────┐
│   BEAM PROPAGATION SIMULATION        │
│            PROCESS                    │
└──────────────────────────────────────┘
                  ↓
┌──────────────────────────────────────┐
│      ACQUIRE REFRACTION INDEX        │─── S401
│   DISTRIBUTION AT ANALYSIS TIME i    │
└──────────────────────────────────────┘
                  ↓
┌──────────────────────────────────────┐
│     SET A VARIETY OF PARAMETER       │─── S402
│             VALUES                    │
└──────────────────────────────────────┘
                  ↓
┌──────────────────────────────────────┐
│     CALCULATE BEAM PROPAGATION        │─── S403
│             IN CHIP                   │
└──────────────────────────────────────┘
                  ↓
┌──────────────────────────────────────┐
│      CALCULATE ELECTRIC FIELD        │─── S404
│   DISTRIBUTION AT CHANNEL EXIT       │
└──────────────────────────────────────┘
                  ↓
┌──────────────────────────────────────┐
│               END                     │
└──────────────────────────────────────┘
```

## FIG. 4

## FIG. 5

## FIG. 6

## FIG. 7

## FIG. 8

## FIG. 9

## FIG. 10

## FIG. 11

## INTERNATIONAL SEARCH REPORT

| International application No. |
|---|
| PCT/JP2006/304227 |

A.  CLASSIFICATION OF SUBJECT MATTER
*G01N25/16*(2006.01), *G01N21/05*(2006.01), *G01N21/41*(2006.01), *G01N35/08*
(2006.01)

According to International Patent Classification (IPC) or to both national classification and IPC

B.  FIELDS SEARCHED

Minimum documentation searched (classification system followed by classification symbols)
G01N25/16, G01N21/05, G01N21/41, G01N35/00-37/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2004-309430 A  (Nippon Sheet Glass Co., Ltd.),<br>04 November, 2004 (04.11.04),<br>Full text; all drawings<br>(Family: none) | 1-4<br>5,6 |
| Y | JP 2004-125478 A  (Nippon Sheet Glass Co., Ltd.),<br>22 April, 2004 (22.04.04),<br>Full text; all drawings<br>(Family: none) | 1-4 |
| Y | WO 99/64846 A1  (Asahi Chemical Industry Co., Ltd.),<br>16 December, 1999 (16.12.99),<br>Page 64, lines 10 to 20<br>& EP 1087223 A1        & CA 2334952 A<br>& CN 1309769 A        & AU 746051 B | 1-4 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    26 May, 2006 (26.05.06) | Date of mailing of the international search report<br>    06 June, 2006 (06.06.06) |
|---|---|
| Name and mailing address of the ISA/<br>    Japanese Patent Office | Authorized officer |
| Facsimile No. | Telephone No. |

Form PCT/ISA/210 (second sheet) (April 2005)

## INTERNATIONAL SEARCH REPORT

International application No.

PCT/JP2006/304227

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
"The special technical feature" of the inventions in claims 1-4 is "a microchemical system having a flow path depth t (μm) in the range of $75 \leq t \leq 300$, a lens numerical aperture NA in the range of $0.04 \leq NA \leq 0.1$, and the lens chromatic aberration difference df (nm) between the excitation light and the detection light in the range of $100 \leq df \leq 250$", whereas "the special technical feature" of the inventions in claims 5, 6 is "a microchemical system TLM output calculating method comprising the generated heat distribution calculating step of calculating the generated heat distribution of a sample by induced light under conditions set by a user, and the temperature (Continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2006/304227

Continuation of Box No.III of continuation of first sheet(2)

distribution calculating step of calculating the temperature distribution of the sample based on thermo-fluid analysis".

Accordingly, these inventions are not considered to be so linked as to form a single general inventive concept, because there is no technical relationship among those inventions involving one or more of the same or corresponding special technical features.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004309430 A

- JP 2004125478 A